# EUROPEAN PATENT APPLICATION

(11) **EP 3 883 007 A1**
(43) Date of publication of application: **22.09.2021**
(21) Application number: 20164567.8
(22) Date of filing: 20.03.2020
(51) Int. Cl.: H01M 2/10, H01M 2/14, H01M 2/18, H01M 10/04

(54) **A BATTERY MODULE, A METHOD FOR ASSEMBLING A BATTERY MODULE AND A VEHICLE INCLUDING A BATTERY PACK COMPRISING AT LEAST ONE BATTERY MODULE**

(71) Applicant: Samsung SDI Co., Ltd., Gyeonggi-do 17084 (KR)
(72) Inventor: Wünsche, Ralph, 8010 Graz (AT); Blatesic, Danijel, 8020 Graz (AT)
(74) Representative: Gulde & Partner

(57) **Abstract**

The present invention relates to a battery module (10), a method (S) for assembling a battery module (10) and a vehicle including a battery pack comprising the at least one battery module (10). The battery module (10) comprises at least one stack (11, 12) of a plurality of battery cells (13) and a module frame (21) configured to receive the at least one stack (11, 12). The module frame (21) comprises a structural component (22) comprising at least one middle plate (42) and a flexible component (23) comprising at least one elastic element (34). When the at least one stack (11, 12) is inserted into the module space (28), the at least one stack (11, 12) compresses the at least one elastic element (34).

## Description

### Field of the Invention

The present invention relates to a battery module, a method for assembling a battery module and a vehicle including a battery pack comprising at least one battery module.

### Technological Background

In the recent years, vehicles for transportation of goods and people have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g., cylindrical or rectangular, depends on the battery's intended purpose. Lithium-ion (and similar lithium polymer) batteries, widely known via their use in laptops and consumer electronics, dominate the most recent group of electric vehicles in development. Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery.

A battery pack is a set of any number of (preferably identical) battery modules. They may be configured in a series, parallel or a mixture of both to deliver the desired voltage, capacity, or power density. Components of battery packs include the individual battery modules and the interconnections, which provide electrical conductivity between them.

The mechanical integration of such a battery pack requires appropriate mechanical connections between the individual components, e.g., of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually comprise a battery housing that serves as enclosure to seal the battery system against the environment and provides structural protection of the battery system's components. Housed battery systems are usually mounted as a whole into their application environment, e.g., an electric vehicle. Thus, the replacement of defect system parts, e.g., a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g., in the mechanic's workshop, of the bulky battery systems becomes difficult.

US 2015/0340669 A1 discloses a battery module with a plate spring to apply a pressing force in the stacked direction of the battery cell stack and US 2018/0145293 A1 disclose a similar battery module with retaining walls which are configured to compress the battery cell stack.

### Summary of Invention

Embodiments of the present disclosure seek to solve at least one of the problems existing in the prior art to at least some extent. In particular, a battery pack for a vehicle is provided, wherein the battery pack comprises at least one battery module. The battery module comprising at least one stack of a plurality of battery cells and a module frame configured to receive the at least one stack of the plurality of battery cells, wherein the plurality of battery cells are stacked in a stacked direction. The module frame comprises a structural component and a flexible component. The structural component comprising a first end plate and a second end plate, wherein each of the first end plate and the second end plate are disposed along the stacked direction and are placed opposite each other separated by a predetermined first distance; and a first side plate and a second side plate, wherein each of the first side plate and the second side plate are disposed normal to the stacked direction and are placed opposite each other separated by a predetermined second distance. The first end plate, the second end plate, the first side plate and the second side plate are configured to enclose a module space. The structural component of the module frame comprises at least one middle plate, which is configured to divide the module space into at least two separate sub-module spaces. The flexible component comprising at least one elastic element arranged between at least one of the first end plate, the second end plate, the first side plate, the second side plate, and the at least one middle plate and the module space.

The module frame may comprise at least one glider having an inclined surface inclined at a predetermined angle into the module space, such that when the at least one stack of the plurality of battery cells is inserted into the module space, the at least one stack glides along the inclined surface and thereby compresses the at least one elastic element.

The at least one elastic element may be a sheet metal plate.

The at least one elastic element may be an elastic polymer plate.

The at least one elastic element may be adapted to compensate an expansion of the stack of at least 2%, preferably at least 5% of the length of the stack.

The at least one elastic element may be fixed to at least one of the first end plate, the second end plate and the at least one middle plate.

The first end plate or the second end plate or the first side plate or the second side plate or the at least one middle plate may be adapted to form the glider.

The module frame may comprise a coating to avoid corrosion of the module frame.

The structural component of the module frame may be adapted as a single integral piece.

According to another aspect of the present invention, a method for assembling a battery module is provided. The method comprising the following steps:
(i) assembling a plurality of battery cells into at least one stack, wherein the plurality of battery cells are stacked in a stacked direction;
(ii) providing a module frame configured to receive the at least one stack of the plurality of battery cells. The module frame comprises a structural component and a flexible component. The structural component comprising a first end plate and a second end plate, wherein each of the first end plate and the second end plate are disposed along the stacked direction and are placed opposite each other separated by a predetermined first distance; and a first side plate and a second side plate, wherein each of the first side plate and the second side plate are disposed normal to the stacked direction and are placed opposite each other separated by a predetermined second distance. The first end plate, the second end plate, the first side plate and the second side plate are configured to enclose a module space, wherein the structural component of the module frame comprises at least one middle plate, which is configured to divide the module space into at least two separate sub-module spaces. The flexible component comprising at least one elastic element arranged between at least one of the first end plate, the second end plate, the first side plate and the second side plate and the at least one middle plate, and the module space; and
(iii) inserting at least one stack of a plurality of battery cells into the module space, such that when the at least one stack of the plurality of battery cells is inserted into the module space, the at least one stack compresses the at least one elastic element.

The method may include a step, in which the module frame may comprise at least one glider having an inclined surface inclined at a predetermined angle into the module space.

The method may include a step, in which when the at least one stack of the plurality of battery cells is inserted into the module space, the at least one stack glides along the inclined surface and thereby compresses the at least one elastic element.

The method may include a step, in which the at least one stack of the plurality of battery cells is compressed before inserting into the module space.

The method may include a step, in which the structural component of the module frame is preassembled.

According to another aspect of the present invention, a vehicle including a battery pack comprising at least one battery module as defined above is provided.

Further aspects of the present invention could be learned from the dependent claims or the following description.

### Brief Description of the Drawings

Features will become apparent to those of ordinary skill in the art by describing in detail exemplary embodiments with reference to the attached drawings in which:
Fig. 1 illustrates a schematic perspective view of a battery module according to an embodiment;
Fig. 2 illustrates a schematic cross-sectional view taken along a line IV-IV of the battery module according to the embodiment;
Fig. 3 illustrates a schematic diagram of a flexible component of a battery module according to an embodiment;
Fig. 4 illustrates a schematic diagram of a flexible component of a battery module according to an embodiment;
Fig. 5 illustrates a schematic cross sectional view taken along the line IV-IV of a battery module with an inclined surface according to an embodiment;
Fig. 6 illustrates a schematic cross sectional view taken along the line IV-IV of a battery module with two inclined surfaces according to an embodiment;
Fig. 7 illustrates a schematic view of a middle plate with two inclined surfaces according to an embodiment;
Fig. 8 illustrates a flow chart of a method for assembling a battery module according to an embodiment;
Fig. 9 illustrates a schematic and perspective view of a step of a method for assembling a battery module according to an embodiment;
Fig. 10 illustrates a schematic and perspective view of a step of a method for assembling a battery module according to an embodiment; and
Fig. 11 illustrates a schematic and perspective view of a step of a method for assembling a battery module according to an embodiment.

### Detailed Description of the Invention

Features of the inventive concept and methods of accomplishing the same may be understood more readily by reference to the following detailed description of embodiments and the accompanying drawings. Hereinafter, example embodiments will be described in more detail with reference to the accompanying drawings, in which like reference numbers refer to like elements throughout. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and techniques those are not necessary to those having ordinary skill in the art for a complete understanding of the aspects and features of the present invention may not be described. Unless otherwise noted, like reference numerals denote like elements throughout the attached drawings and the written description, and thus, descriptions thereof will not be repeated. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention."

It will be understood that although the terms "first" and "second" are used to describe various elements, these elements should not be limited by these terms. These terms are only used to distinguish one element from another element. For example, a first element may be named as a second element and, similarly, a second element may be named as a first element, without departing from the scope of the present invention.

In the following description of embodiments of the present invention, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. It will also be understood that when a component or an element is referred to as being "above" or "on" another component or element, it can be directly on the other component or element, or intervening components, or elements may also be present.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

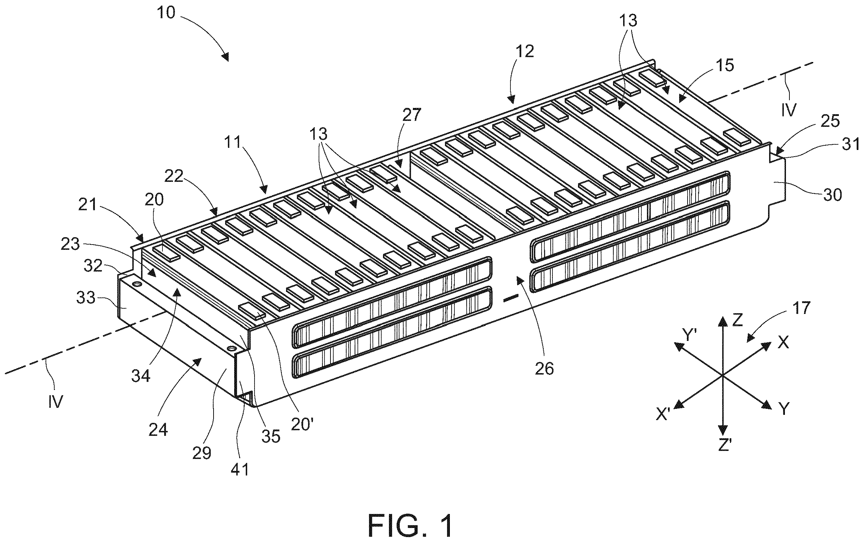

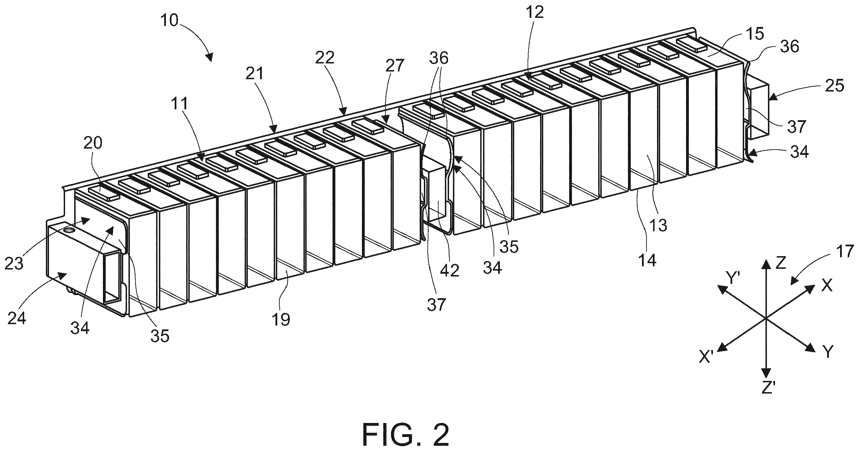

Fig. 1 is a perspective view illustrating a battery module 10 according to an exemplary embodiment and Fig. 2 is a schematic cross-sectional view taken along the line IV-IV of Fig. 1.

As shown in Figs. 1 and 2, the battery module 10 according to an embodiment may comprise two stacks of a plurality of battery cells 13, namely a first battery stack 11 and a second battery stack 12.

The battery cell 13 according to an embodiment may include an electrode assembly (not shown in figures), and a case 14 for accommodating the electrode assembly, the case 14 containing an electrolyte. The electrode assembly may be formed as a jelly roll type electrode assembly by spirally winding a positive electrode and a negative electrode with a separator therebetween (not shown in figures). The electrolyte may comprise lithium salt, such as LiPF6 or LiBF4 with an organic solvent, such as EC, PC, DEC, or EMC. The electrolyte solution may be in a liquid, solid, or a gel state.

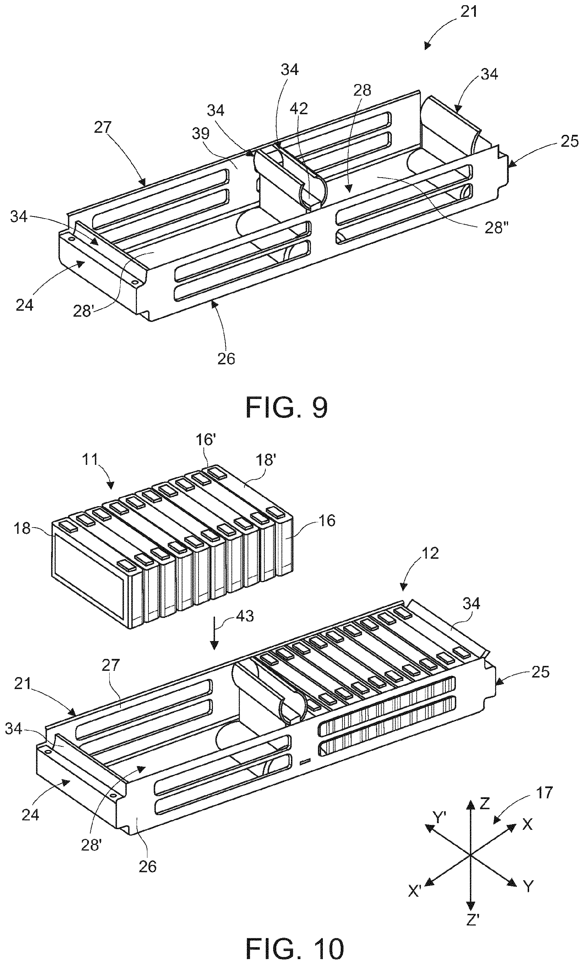

The battery cell 13 may also include a cap assembly 15 for sealing an opening of the case 14. The battery cell 13 is described as a non-limiting example of a lithium ion secondary battery configured to have a prismatic shape (or rectangular). The case 14 of the battery cell 13 may comprise two side surfaces 16, 16', as shown in Fig. 10, facing each other normal to a direction YY' of a coordinate axis 17. The case 14 may comprise two wide flat surfaces 18, 18' , as shown in Fig. 10, facing each other normal to a direction XX'. The case 14 may be configured to have a substantially cuboidal shape, and an opening may be formed at one side thereof. The case 14 may be formed of a metal, such as aluminum.

The case 14 may further comprise a base 19 disposed opposite to the cap assembly 15. The two side surfaces 16, 16' and the two wide flat surfaces 18, 18' with the base 19 may form a space for accommodating the electrode assembly and the electrolyte. Furthermore, the case 14 may be hermetically sealed by the cap assembly 15. The base 19 and the cap assembly 15 may be parallel to each other and normal to a direction ZZ'. The cap assembly 15 may be provided with positive and negative electrode terminals 20 and 20' having different polarities, and a vent (not shown in figures). The vent is a safety means of the battery cell 13, which acts as a passage through which gas generated in the battery cell 13 is exhausted to the outside of the battery cell 13.

A pair of stack end plates (not shown in figures) may be provided to face wide flat surfaces 18, 18' of the battery cells 13 at the outside of the battery cells 13, and a connection plate (not shown in figures) may be configured to connect the pair of stack end plates to each other thereby fixing the plurality of battery cells 13 together to form the first battery stack 11 and the second battery stack 12, respectively. The wide flat surfaces 18, 18' of each of the neighboring battery cells 13 may be stacked together along the direction XX' to form the first battery stack 11 and the second battery stack 12, respectively.

The battery module 10 may comprise a module frame 21 configured to receive the first battery stack 11 and the second battery stack 12, each comprising a plurality of battery cells 13 or a predetermined number of battery cells 13. The module frame 21 may comprise a structural component 22 and a flexible component 23.

The structural component 22 may comprise a first end plate 24 and a second end plate 25. The first end plate 24 and the second end plate 25 may be disposed along the stacked direction XX'. In other words, the first end plate 24 and the second end plate 25 may be disposed such that, a normal to the first end plate 24 and the second end plate 25 is parallel to the direction XX'. In other words, the first end plate 24 and the second end plate 25 are placed facing opposite each other in such a manner that the first end plate 24 is located on a side X' of the direction XX', in which the battery cells 13 of the first battery stack 11 and the second battery stack 12 are stacked, and the second end plate 25 is located on the other side X of the direction XX'. The width of each of the first end plate 24 and the second end plate 25 in the direction YY' may be approximately equal to the width of the wide flat surfaces 18, 18' of the battery cells 13 in the direction YY'. Furthermore, the first end plate 24 and the second end plate 25 may be placed opposite each other separated by a predetermined first distance. The predetermined first distance may comprise a length equal to at least a sum of lengths of a total number of battery stacks to be included in the battery module 10. For example, in the present embodiment, the predetermined first distance may comprise a length equal to at least a sum of the lengths of two battery stacks, that is the first battery stack 11 and the second battery stack 12, which may be included in the battery module 10.

The structural component 22 may comprise a first side plate 26 and a second side plate 27. The first side plate 26 and the second side plate 27 may be disposed normal to the stacked direction XX'. In other words, the first side plate 26 and the second side plate 27 may be disposed such that, a normal to the first side plate 26 and the second side plate 27 is parallel to the direction YY'.

The length of each of the first side plate 26 and the second side plate 27 in the direction XX' is dependent on a sum of lengths of the total number of battery stacks to be included in the battery module 10. For example, in the present embodiment, the length of each of the first side plate 26 and the second side plate 27 in the direction XX' may comprise a length dependent on a sum of the lengths of two battery stacks, that is the first battery stack 11 and the second battery stack 12, which may be included in the battery module 10.

Furthermore, the first side plate 26 and the second side plate 27 may be placed opposite each other separated by a predetermined second distance. The predetermined second distance may comprise a length equal to the width of the battery cell 13 in the direction YY' or the width of the wide flat surfaces 18, 18' of the battery cells 13 in the direction YY'.

A first end 41 of the first side plate 26 may be engaged to a first end 29 of the first end plate 24. At least one of the first end 41 and the first end 29 may be provided with pin holes or screw holes (not shown in figures), so that the first side plate 26 may be engaged to the first end plate 24. Furthermore, other engaging means such as welding, fasteners, adhesives or rivets or a combination thereof may be also adopted. Similarly, a second end 30 of the first side plate 26 may be engaged to a first end 31 of the first second end plate 25. At least one of the second end 30 and the first end 31 may be provided with pin holes or screw holes (not shown in figures), so that the first side plate 26 may be engaged to the second end plate 25. Furthermore, other engaging means such as welding, fasteners, adhesives or rivets or a combination thereof may be also adopted.

In a similar manner, a first end 32 of the second side plate 27 may be engaged to a second end 33 of the first end plate 24. At least one of the first end 32 and the second end 33 may be provided with pin holes or screw holes (not shown in figures), so that the second side plate 27 may be engaged to the first end plate 24. Furthermore, other engaging means such as welding, fasteners, adhesives or rivets or a combination thereof may be also adopted. Similarly, a second end (not shown in figures) of the second side plate 27 may be engaged to a second end (not shown in figures) of the second end plate 25. At least one of the second end of the second side plate 27 and the second end of the second end plate 25 may be provided with pin holes or screw holes (not shown in figures), so that the second side plate 27 may be engaged to the second end plate 25. Furthermore, other engaging means such as welding, fasteners, adhesives or rivets or a combination thereof may be also adopted.

The structural component 22 of the module frame 21 may be adapted as a single integral piece. For example, the structural component 22 may be manufactured by as single welded frame or by manufactured by means of mold casting or 3D-printing. This is of advantage, because this enables to manufacture a robust as well as lighter (in weight) structural component 22, since no further fixing components such as module screws or bolts are needed. This in turn prevents the danger of loosing of the fixing components of the battery module 10. For example, when the battery cells 13 swell, there may be a certain additional load and torsion on the module screws, which could lead to a loosening of the fixation of the battery module 10. Hence, the structural component 22 of the module frame 21 adapted as a single integral piece may lead to a higher life expectancy of the battery module 10 as a whole.

The first end plate 24, the second end plate 25, the first side plate 26 and the second side plate 27 may be configured to enclose a module space 28 (refer to Fig. 9). The module space 28 may be configured to receive or accommodate at least one stack 11, 12 of the plurality of battery cells 13. The module space 28 may accommodate the first battery cell stack 11 and the second battery stack 12. Furthermore, the dimensions of the first end plate 24 and the second end plate 25 and the predetermined first distance at which the first end plate 24 and the second end plate 25 are disposed facing opposite each other, as well the dimensions of the first side plate 26 and the second side plate 27 and the predetermined second distance at which the first side plate 26 and the second side plate 27 are disposed facing opposite each other.

As shown in Figs. 1 and 2, the structural component 22 of the module frame 21 may comprise at least one middle plate 42, which may be configured to divide the module space 28 into at least two separate sub-module spaces 28', 28". As shown in Fig. 9, the middle plate 42 may be configured to divide the module space 28 into a two separate sub-module spaces 28', 28", namely a first sub-module space 28' and a second sub-module space 28". This is of advantage, because the middle plate 42 can provide more robustness and stability to the module frame 21, especially in the case where the battery module 10 may comprise more than one stacks 11, 12 of a plurality of battery cells 13. Furthermore, the presence of the middle plate 42 may ensure that the corresponding stacks 11, 12 of the plurality of battery cells 13 may be packed into the module frame 21 independent of each other. This in turn would make the entire assembling of the battery module 10 more efficient.

The first end plate 24, the second end plate 25, the first side plate 26, the second side plate 27 along with the middle plate 42 are configured such that a predetermined number of stacks of the plurality of battery cells 13 can be fittingly accommodated within the module space 28.

The flexible component 23 may comprise at least one elastic element 34 between at least one of the first end plate 24, the second end plate 25, the first side plate 26, the second side plate 27 and the middle plate 42, and the module space 28. As shown in Figs. 1 to 3 and 9 and 10, the at least one elastic element 34 may be a sheet metal plate 35, for example, a steel plate. The sheet metal plate 35 may have a bented sheet metal component 36 with a flexible structure and a non-bented sheet metal component 37 with a rigid flat structure. The sheet metal plate 35 may be compressed from its original state to a compressed state due the bending of the bented sheet metal component 36 upon the application of force on the sheet metal plate 35. However, upon the removal of the application of force on the sheet metal plate 35, the bented sheet metal component 36 may return to it its original state. The sheet metal plate 35 may be fixed to at least one of the first end plate 24 on a side facing the module space 28 and the second end plate 25 on a side facing the module space 28, such that the non-bented sheet metal component 37 is fixed to least one of the first end plate 24 and the second end plate 25. For example, the non-bented sheet metal component 37 is fixed to at least one of the first end plate 24 and the second end plate 25 by means of welding or using an adhesive or by means of screws, wherein the non-bented sheet metal component 37 and at least one of the first end plate 24 and the second end plate 25 may be provided with pin holes or screw holes (not shown in figures), so that the sheet metal plate 35 may be engaged to the at least one of the first end plate 24 and the second end plate 25.

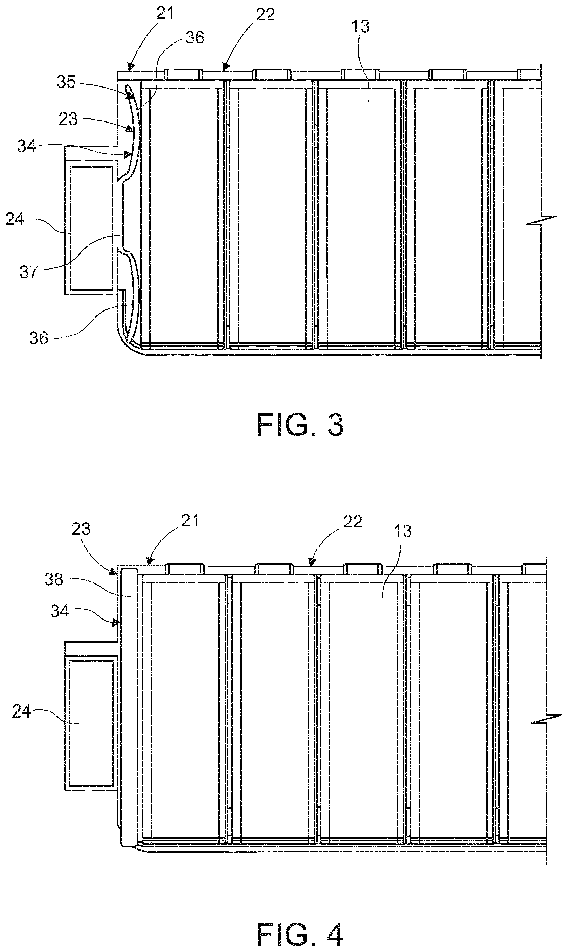

As shown in Fig. 4, the at least one elastic element 34 may be an elastic polymer plate 38. Polymers such as vinyl, linoleum, polyurethane or rubber may be used as materials for the elastic polymer plate 38. The elastic polymer plate 38 may be fixed to the at least one of the first end plate 24 on the side facing the module space 28 and the second end plate 25 on the side facing the module space 28 by means of an adhesive. This is of advantage, because the elastic polymer plate 38 can be easily fixed to the at least one of the first end plate 24 and the second end plate 25, so that when a force is applied on the elastic polymer plate 38, the elastic polymer plate 38 may be compressed from its original state to a compressed state. However, upon the removal of the application of force on the elastic polymer plate 38, the elastic polymer plate 38 may return to it its original state.

Hence, the at least one elastic element 34 may be fixed to at least one of the first end plate 24 and the second end plate 25, such that upon the application of force on the at least one of the first end plate 24 and the second end plate 25, the corresponding at least one elastic element 34 is compressed from its original state to a compressed state. However, upon the removal of the application of force on the at least one of the first end plate 24 and the second end plate 25, the corresponding at least one elastic element 34 may return to it its original state. This is of advantage, because the at least one elastic element 34 of the flexible component 23 provides the module frame 21 with a certain flexibility to handle cell swelling of the battery cells 13.

During charging of the battery cells 13, the battery cells 13 may swell, which in turn may lead to a swelling of the corresponding stack 11, 12. This swelling of the corresponding stack 11, 12 may lead to an application of force on the walls of the module frame 21, especially in the stacked direction XX'. In this case, the corresponding force may be exerted on the first end wall 24 and the second end 25 of the module frame 21. The module frame 21 may experience a force of about 80 Kilo-Newton. Moreover, since fixation points, such as points where the end plates 24, 25 may be attached to the side plates 26, 27, may be on the same end plates 24, 25 that may bend during cell swelling, there may be a certain additional load and torsion onto module screws of the fixation points. This in turn may lead to a loosening of the module fixation and hence, may lead to a damage of the battery module 10.

However, the at least one elastic element 34 fixed to the at least one of the first end wall 24 and the second end wall 25 may be correspondingly compressed, which in turn absorbs the applied force and thereby reduces the exerted stress on the first end wall 24 and the second end 25 of the module frame 21. Hence, a stable and robust structure of the module frame 21 may be ensured. The flexible component 23 of the module frame 21 can enable to compensate the swelling of battery cells 13 which can lead to higher mechanical forces onto the case 14 and therefore onto the interior components of the battery cells 13. Hence, the life expectancy of the battery module 10 may be hereby increased.

The at least one elastic element 34 may be adapted to compensate an expansion of the stack 11, 12 of at least 2%, preferably at least 5% of the length of the stack 11, 12. Especially, during the charging of the battery cells 13, the stacks 11, 12 of the plurality of battery cells 13 may swell or increase in length in proportion to the length of the corresponding stack 11, 12. In this case the at least one elastic element 34 may compress up to at least 2%, preferably 5% of the length of the stack 11, 12 corresponding to the swelling of the stack 11, 12. This would ensure that the mechanical stress caused by the swelling of the stack 11, 12 during the charging of the battery cells 13, may be sufficiently compensated by the corresponding compression of the at least one elastic element 34. Hence, the at least one elastic element 34 may protect the battery module 10 from wear and increase its life expectancy.

The at least one elastic element 34 may be fixed to the at least one middle plate 42. The at least one elastic element 34 may be the sheet metal plate 35 or the elastic polymer plate 38. In the case of the sheet metal plate 35, the non-bented sheet metal component 37 may be fixed to at least one side of the middle plate 42 facing the corresponding sub-module space 28', 28" by means of welding or using an adhesive or by means of screws, wherein the non-bented sheet metal component 37 and the at least one side of the middle plate 42 may be provided with pin holes or screw holes (not shown in figures), so that the sheet metal plate 35 may be fixed to at least one side of the middle plate 42 facing the corresponding sub-module space 28', 28". Similarly, in the case of the elastic polymer plate 38, the elastic polymer plate 38 may be fixed to the side of the middle plate 42 facing the corresponding sub-module space 28', 28" by means of an adhesive.

According to the embodiment shown in Fig. 2, the middle plate 42 may comprise two elastic elements 34 each on the either side of the middle plate 42. Here, the sheet metal plate 35 may be fixed to the first end plate 24 and another sheet metal plate 35 may be fixed on the side of the middle plate 42 facing the first sub-module space 28'. When the first battery stack 11 may be brought into the first sub-module space 28', then the bented sheet metal components 36 of each of the two corresponding sheet metal plates 35 may be compressed. Hence, the first battery stack 11 may be placed firmly inside the first sub-module space 28' of the battery module 10. Similarly, the sheet metal plate 35 may be fixed to the second end plate 25 and another sheet metal plate 35 may be fixed to the side of the middle plate 42 facing the second sub-module space 28". When the second battery stack 12 may be brought into the second sub-module space 28", then the bented sheet metal components 36 of each of the two corresponding sheet metal plates 35 may be compressed and the second battery stack 12 may be placed firmly inside the second sub-module space 28" of the battery module 10. Furthermore, the first battery stack 11 and the second battery stack 12 may be either placed simultaneously or one after another into their respective sub-module spaces 28' and 28". However, different types of elastic elements 34, that is a sheet metal plate 35 or the elastic polymer plate 38 may be used on one of the first end plate 24 or the second end plate 25 or on each of the sides of the middle plate 42. Furthermore, the presence of two elastic elements 34 on either side of the stack 11, 12 may provide higher compressibility during the swelling of the battery cells 13 of the corresponding stack 11, 12. Thus as a whole, the overall ability of the battery module 10 to absorb the mechanical force induced due the swelling of the battery cells 13, may be increased as a result of the presence of four elastic elements 34, two each per sub-module space 28', 28".

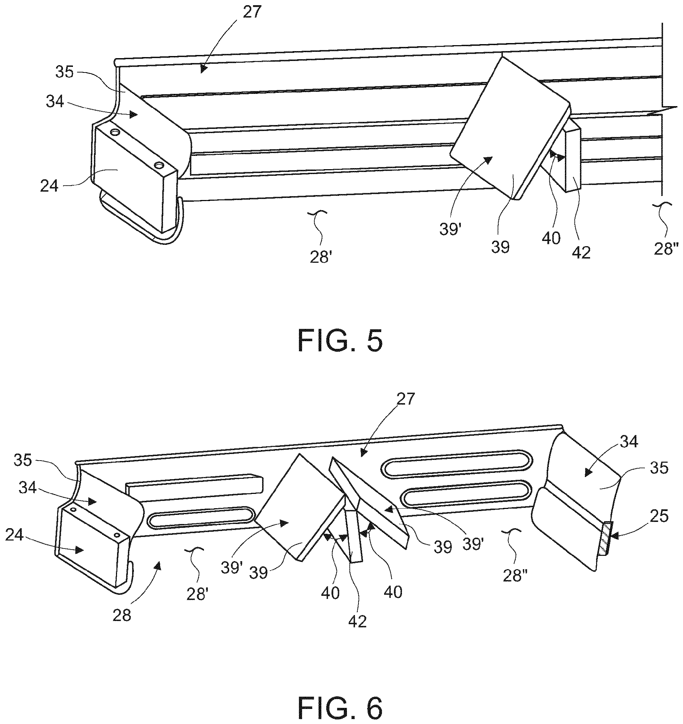

According to another embodiment shown in Fig. 5, which is a schematic cross-sectional view taken along the IV-IV line of Fig. 1, wherein the first sub-module space 28' is depicted and the module frame 21 is adapted to receive a respective stack 11 of a plurality of battery cells 13 into the first sub-module space 28'. Fig. 5 shows that the module frame 21 may comprise at least one glider 39' having an inclined surface 39 inclined at a predetermined angle 40 into the module space 28, such that when the stack 11 of the plurality of battery cells 13 may be inserted into the first sub-module space 28', the stack 11 may glide along the inclined surface 39 and thereby may compress the elastic element 34. The glider 39' may be fixed to one of the first end plate 24, the second end plate 25, and the at least one middle plate 42 by means of fixing element, such as at least one rivet or at least one screw, or by means of welding or by means of an adhesive or fastener, inclined at the predetermined angle 40 into the module space 28. The means of fixing the glider 39' to one of the first end plate 24, the second end plate 25, and the at least one middle plate 42 at a predetermined angle 40 into the module space 28 may be known to a person skilled in the art. As shown in Fig. 5, the glider 39' may be fixed to one side of the middle plate 42 having an inclined surface 39 inclined at a predetermined angle 40 into the first sub-module space 28'. The sheet metal plate 35 may be used as the elastic element 34 fixed to the first end plate 24 facing into the first sub-module space 28'. Hence, when the stack 11 of the plurality of battery cells 13 is inserted into the first sub-module space 28', the stack 11 may glide along the inclined surface 39 and thereby may compress the elastic element 34, which is the sheet metal plate 35. The presence of the inclined surface 39 may ensure a smooth and stable placing of the stack 11 of the plurality of battery cells 13 into the first sub-module space 28', as the stack 11 may glide along the inclined surface 39 in a smooth manner and thereby may compress the elastic element 34 which is fixed to the first end plate 24. This would lead to a smooth and stable placing of the stack 11 into the first sub-module space 28'.

According to another embodiment shown in Fig. 6, which is a schematic cross-sectional view taken along the IV-IV line of Fig. 1, wherein the module frame 21 is adapted to receive two stacks 11, 12, that is the first battery stack 11 and the second battery stack 12, of a plurality of battery cells 13. Fig. 6 shows that the module frame 21 may comprise two gliders 39' having an inclined surface 39 inclined at a predetermined angle 40 each into the sub-module spaces 28' and 28", respectively. The predetermined angels 40 corresponding to each of the inclined surfaces 39 to either side of the middle plate 42 may be different. The two gliders 39' may be fixed to each side of the middle plate 42. In the case of the first sub-module space 28', the sheet metal plate 35 of the elastic element 34 may be fixed to the first end plate 24 facing the first sub-module space 28', whereas the glider 39' may be fixed to the middle plate 42 on the side facing the first sub-module space 28'. Similarly, In the case of the second sub-module space 28", the sheet metal plate 35 of the elastic element 34 may be fixed on the second end plate 25 facing the second sub-module space 28", whereas the glider 39' may be fixed to the middle plate 42 on the side facing the first sub-module space 28". Thus, Fig. 6 shows that the module frame 21 may comprise at least one glider 39' having an inclined surface 39 inclined at a predetermined angle 40 into the module space 28, such that when the at least one stack 11, 12 of the plurality of battery cells 13 may be inserted into the module space 28, the at least one stack 11, 12 may glide along the inclined surface 39 of the at least one glider 39' and thereby may compress the elastic element 34.

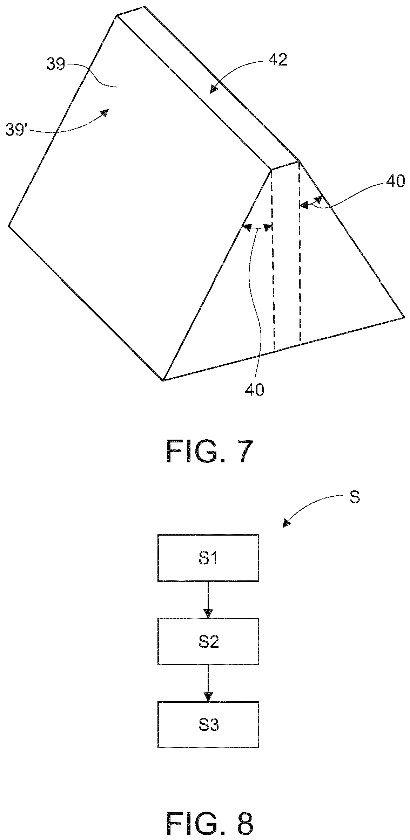

The first end plate 24 or the second end plate 25 or the first side plate 26 or the second side plate 27 may be adapted to form the glider. In this case the glider may be a part of the corresponding first end plate 24 or the second end plate 25 or the first side plate 26 or the second side plate 27. Furthermore, as shown in Fig. 7, the at least one middle plate 42 may be adapted to form the at least one glider 39'. In other words, the middle plate 42 may be adapted to separate the module space 28 into two sub-module spaces 28' and 28", as well as be adapted to form the glider 39' facing the first sub-module space 28' and the second sub-module space 28", respectively. In other words, the glider 39' may be manufactured directly as a part of one of the first end plate 24, the second end plate 25, the first side plate 26, the second side plate 27 and the middle plate 42. For cases including more than one sub-module spaces 28', 28", such as with the first sub-module space 28' and the second-module space 28", in which case two gliders 39' may be integrated, that is one inclined surface 39 for each sub-module space 28' and 28", respectively.

The module frame 21 may be coated to avoid corrosion of the module frame 21. This is of advantage, because any suitable material, for example steel may be used for the manufacture of the module frame 21, for example by means of welding. The manufactured module frame 21 may be then coated to avoid corrosion. This is of further advantage because it reduces the material costs, since now a cheaper relevant material may be used to manufacture the module frame and then it may be coated with a relevant coating to avoid corrosion, instead of using an expensive material such as stainless steel for the manufacture of the module frame 21, in order to avoid corrosion, especially in cases where coating of the module frame 21 is not possible.

Fig. 8 depicts a flow chart of a method S for assembling a battery module 10. The method S may comprise a first step S1, which may include an assembling of a plurality of battery cells 13 into at least one stack 11, 12, wherein the plurality of battery cells 13 may be stacked in a stacked direction XX'.

The method S may comprise a second step S2, which may include for providing a module frame 21 as shown in Fig. 9, which may be configured to receive the at least one stack 11, 12 of the plurality of battery cells 13, wherein the module frame 21 may comprise a structural component 22 and a flexible component 23.

The structural component 22 may comprise a first end plate 24 and a second end plate 25, wherein each of the first end plate 24 and the second end plate 25 may be disposed along the stacked direction XX' and may be placed opposite each other separated by a predetermined first distance.

The structural component 22 may comprise a first side plate 26 and a second side plate 27, wherein each of the first side plate 26 and the second side plate 27 may be disposed normal to the stacked direction XX' and may be placed opposite each other separated by a predetermined second distance, wherein the first end plate 24, the second end plate 25, the first side plate 26 and the second side plate 27 may be configured to enclose a module space 28, wherein the structural component 22 of the module frame 21 comprises at least one middle plate 42, which is configured to divide the module space 28 into at least two separate sub-module spaces 28', 28".

The flexible component 23 may comprise at least one elastic element 34 arranged between at least one of the first end plate 24, the second end plate 25, the first side plate 26, the second side plate 27 and the at least one middle plate 42, and the module space 28.

The method S may comprise a third step S3, which may include inserting at least one stack 11, 12 of the plurality of battery cells 13 into the module space 28, such that when the at least one stack 11, 12 of the plurality of battery cells 13 may be inserted into the module space 28, the at least one stack 11, 12 may compress the at least one elastic element 34.

The module frame 21 may comprise at least one glider 39' having an inclined surface 39 inclined at a predetermined angle 40 into the module space 28, as shown in Fig. 7, such that when the at least one stack 11, 12 of the plurality of battery cells 13 may be inserted into the module space 28, the at least one stack 11, 12 may glide along the at least one inclined surface 39 of the glider 39' and thereby may compress the at least one elastic element 34. The middle plate 42 may be adapted to form the glider 39'.

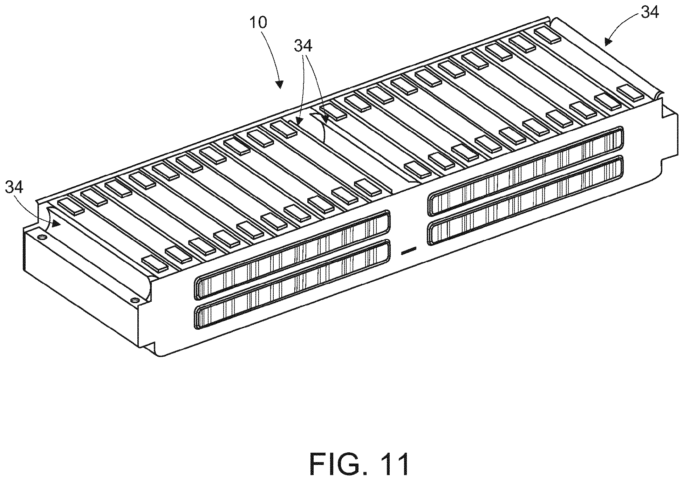

Fig. 10 shows that the second battery stack 12 has been brought into the second sub-module space 28", whereas the first battery stack 11 is being brought into the first sub-module space 28', as depicted by an arrow 43. Fig. 11 depicts the final state in which both the first battery stack 11 and the second battery 12 have been brought into their respective sub-module spaces 28' and 28". Hence, the process of assembling a battery pack may be completed.

The structural component 22 of the module frame 21 may be preassembled, for example, by welding as a welding assembly. In this case, the structural component 22 may be made of steel and the welding assembly, that is the preassembled structural component 22, may be then coated, for example by a cataphoretic coating, to prevent corrosion of the module frame 21.

The at least one stack 11, 12 of the plurality of battery cells 13 may be compressed before inserting into the module space 28. For additional fixation of the stacks 11, 12, the stacks 11, 12 may be glued to the module frame 21. After insertion of the stacks 11, 12 of the plurality of battery cells 13, the battery module 10 may be ready for the welding of cell connection bus-bars and further processing.

The invention further discloses a vehicle including a battery pack comprising at least one battery module 10.

### Reference signs

- 10: battery module
- 11: first battery stack
- 12: second battery stack
- 13: battery cell
- 14: case
- 15: cap assembly
- 16: side surface
- 16': side surface
- 17: coordinate axis
- 18: wide flat surface
- 18': wide flat surface
- 19: base
- 20: positive electrode terminal
- 20': negative electrode terminal
- 21: module frame
- 22: structural component
- 23: flexible component
- 24: first end plate
- 25: second end plate
- 26: first side plate
- 27: second side plate
- 28: module space
- 28': first sub-module space
- 28": second sub-module space
- 29: first end
- 30: second end
- 31: first end
- 32: first end
- 33: second end
- 34: elastic element
- 35: sheet metal plate
- 36: bented sheet metal component
- 37: non-bented sheet metal component
- 38: elastic polymer plate
- 39: inclined surface
- 39': glider
- 40: predetermined angle
- 41: first end
- 42: middle plate
- 43: arrow
- S: method
- S1: first step
- S2: second step
- S3: third step
- XX': stacked direction
- YY': direction
- ZZ': direction
- X: coordinate axis direction
- X': coordinate axis direction
- Y: coordinate axis direction
- Y': coordinate axis direction
- Z: coordinate axis direction
- Z': coordinate axis direction

## Claims

1. A battery module (10) comprising at least one stack (11, 12) of a plurality of battery cells (13) and a module frame (21) configured to receive the at least one stack (11, 12) of the plurality of battery cells (13), wherein the plurality of battery cells (13) are stacked in a stacked direction (XX'), wherein the module frame (21) comprises:
(i) a structural component (22) comprising:
- a first end plate (24) and a second end plate (25), wherein each of the first end plate (24) and the second end plate (25) are disposed along the stacked direction (XX') and are placed opposite each other separated by a predetermined first distance; and
- a first side plate (26) and a second side plate (27), wherein each of the first side plate (26) and the second side plate (27) are disposed normal to the stacked direction (XX') and are placed opposite each other separated by a predetermined second distance,
wherein the first end plate (24), the second end plate (25), the first side plate (26) and the second side plate (27) are configured to enclose a module space (28), wherein the structural component (22) of the module frame (21) comprises at least one middle plate (42), which is configured to divide the module space (28) into at least two separate sub-module spaces (28', 28"); and
(ii) a flexible component (23) comprising:
- at least one elastic element (34) arranged between at least one of the first end plate (24), the second end plate (25), the first side plate (26), the second side plate (27), and the at least one middle plate (42) and the module space (28), such that when the at least one stack (11, 12) of the plurality of battery cells (13) is inserted into the module space (28), the at least one stack (11, 12) compresses the at least one elastic element (34).

2. The battery module according to claim 1, wherein the module frame (21) comprises at least one glider (39') having an inclined surface (39) inclined at a predetermined angle (40) into the module space (28), such that when the at least one stack (11, 12) of the plurality of battery cells (13) is inserted into the module space (28), the at least one stack (11, 12) glides along the inclined surface (39) and thereby compresses the at least one elastic element (34).

3. The battery module according to claim 1 or 2, wherein the at least one elastic element (34) is a sheet metal plate (35).

4. The battery module according to claim 1or 2, wherein the at least one elastic element (34) is an elastic polymer plate (38).

5. The battery module according to any of the above mentioned claims, wherein the at least one elastic element (34) is adapted to compensate an expansion of the stack (11, 12) of at least 2%, preferably at least 5% of the length of the stack (11, 12).

6. The battery module according to any of the above mentioned claims, wherein the at least one elastic element (34) is fixed to at least one of the first end plate (24), the second end plate (25) and the at least one middle plate (42).

7. The battery module according to any of the claims 2 to 6, wherein the first end plate (24) or the second end plate (25) or the first side plate (26) or the second side plate (27) or the at least one middle plate (42) is adapted to form the glider (39').

8. The battery module according to any of the above mentioned claims, wherein the module frame (21) comprises a coating to avoid corrosion of the module frame (21).

9. The battery module (10) according to any of the above mentioned claims, wherein the structural component (22) of the module frame (21) is adapted as a single integral piece.

10. A method (S) for assembling a battery module (10) comprising the following steps:
(i) (S1) assembling a plurality of battery cells (13) into at least one stack (11, 12), wherein the plurality of battery cells (13) are stacked in a stacked direction (XX');
(ii) (S2) providing a module frame (21) configured to receive the at least one stack (11, 12) of the plurality of battery cells (13), wherein the module frame (21) comprises:
(a) a structural component (22) comprising:
- a first end plate (24) and a second end plate (25), wherein each of the first end plate (24) and the second end plate (25) are disposed along the stacked direction (XX') and are placed opposite each other separated by a predetermined first distance; and
- a first side plate (26) and a second side plate (27), wherein each of the first side plate (26) and the second side plate (27) are disposed normal to the stacked direction (XX') and are placed opposite each other separated by a predetermined second distance,
wherein the first end plate (24), the second end plate (25), the first side plate (26) and the second side plate (27) are configured to enclose a module space (28), wherein the structural component (22) of the module frame (21) comprises at least one middle plate (42), which is configured to divide the module space (28) into at least two separate sub-module spaces (28', 28"); and
(b) a flexible component (23) comprising:
- at least one elastic element (34) arranged between at least one of the first end plate (24), the second end plate (25), the first side plate (26), the second side plate (27) and the at least one middle plate (42), and the module space (28); and
(iii) (S3) inserting the at least one stack (11, 12) of the plurality of battery cells (13) into the module space (28), such that when the at least one stack (11, 12) of the plurality of battery cells (13) is inserted into the module space (28), the at least one stack (11, 12) compresses the at least one elastic element (34).

11. The method according to claim 10, wherein the module frame (21) comprises at least one glider (39') having an inclined surface (39) inclined at a predetermined angle (40) into the module space (28).

12. The method according to claim 10, wherein when the at least one stack (11, 12) of the plurality of battery cells (13) is inserted into the module space (28), the at least one stack (11, 12) glides along the inclined surface (39) and thereby compresses the at least one elastic element (34).

13. The method according to claim 10, wherein the at least one stack (11, 12) of the plurality of battery cells (13) is compressed before inserting into the module space (28).

14. The method according to any of the claims 10 to 13, wherein the structural component (22) of the module frame (21) is preassembled.

15. A vehicle including a battery pack comprising at least one battery module (10) according to any one of the claims from 1 to 9.

## Amended claims

### Amended claims in accordance with Rule 137(2) EPC.

1. A battery module (10) comprising at least one stack (11, 12) of a plurality of battery cells (13) and a module frame (21) configured to receive the at least one stack (11, 12) of the plurality of battery cells (13), wherein the plurality of battery cells (13) are stacked in a stacked direction (XX'), wherein the module frame (21) comprises:
(i) a structural component (22) comprising:
- a first end plate (24) and a second end plate (25), wherein each of the first end plate (24) and the second end plate (25) are disposed along the stacked direction (XX') and are placed opposite each other separated by a predetermined first distance; and
- a first side plate (26) and a second side plate (27), wherein each of the first side plate (26) and the second side plate (27) are disposed normal to the stacked direction (XX') and are placed opposite each other separated by a predetermined second distance,
wherein the first end plate (24), the second end plate (25), the first side plate (26) and the second side plate (27) are configured to enclose a module space (28), wherein the structural component (22) of the module frame (21) comprises at least one middle plate (42), which is configured to divide the module space (28) into at least two separate sub-module spaces (28', 28"); and
(ii) a flexible component (23) comprising:
- at least one elastic element (34) fixed to one of the first end plate (24), the second end plate (25) and the at least one middle plate (42), such that when the at least one stack (11, 12) of the plurality of battery cells (13) is inserted into the module space (28), the at least one stack (11, 12) compresses the at least one elastic element (34).

2. The battery module according to claim 1, wherein the module frame (21) comprises at least one glider (39') having an inclined surface (39) inclined at a predetermined angle (40) into the module space (28), such that when the at least one stack (11, 12) of the plurality of battery cells (13) is inserted into the module space (28), the at least one stack (11, 12) glides along the inclined surface (39) and thereby compresses the at least one elastic element (34).

3. The battery module according to claim 1 or 2, wherein the at least one elastic element (34) is a sheet metal plate (35).

4. The battery module according to claim 1 or 2, wherein the at least one elastic element (34) is an elastic polymer plate (38).

5. The battery module according to any of the above mentioned claims, wherein the at least one elastic element (34) is adapted to compensate an expansion of the stack (11, 12) of at least 2%, preferably at least 5% of the length of the stack (11, 12).

6. The battery module according to claim 2, wherein the first end plate (24) or the second end plate (25) or the first side plate (26) or the second side plate (27) or the at least one middle plate (42) is adapted to form the glider (39').

7. The battery module according to any of the above mentioned claims, wherein the module frame (21) comprises a coating to avoid corrosion of the module frame (21).

8. The battery module (10) according to any of the above mentioned claims, wherein the structural component (22) of the module frame (21) is adapted as a single integral piece.

9. A method (S) for assembling a battery module (10) comprising the following steps:
(i) (S1) assembling a plurality of battery cells (13) into at least one stack (11, 12), wherein the plurality of battery cells (13) are stacked in a stacked direction (XX');
(ii) (S2) providing a module frame (21) configured to receive the at least one stack (11, 12) of the plurality of battery cells (13), wherein the module frame (21) comprises:
(a) a structural component (22) comprising:
- a first end plate (24) and a second end plate (25), wherein each of the first end plate (24) and the second end plate (25) are disposed along the stacked direction (XX') and are placed opposite each other separated by a predetermined first distance; and
- a first side plate (26) and a second side plate (27), wherein each of the first side plate (26) and the second side plate (27) are disposed normal to the stacked direction (XX') and are placed opposite each other separated by a predetermined second distance,
wherein the first end plate (24), the second end plate (25), the first side plate (26) and the second side plate (27) are configured to enclose a module space (28), wherein the structural component (22) of the module frame (21) comprises at least one middle plate (42), which is configured to divide the module space (28) into at least two separate sub-module spaces (28', 28"); and
(b) a flexible component (23) comprising:
- at least one elastic element (34) fixed to one of the first end plate (24), the second end plate (25) and the at least one middle plate (42); and
(iii) (S3) inserting the at least one stack (11, 12) of the plurality of battery cells (13) into the module space (28), such that when the at least one stack (11, 12) of the plurality of battery cells (13) is inserted into the module space (28), the at least one stack (11, 12) compresses the at least one elastic element (34).

10. The method according to claim 9, wherein the module frame (21) comprises at least one glider (39') having an inclined surface (39) inclined at a predetermined angle (40) into the module space (28).

11. The method according to claim 9, wherein when the at least one stack (11, 12) of the plurality of battery cells (13) is inserted into the module space (28), the at least one stack (11, 12) glides along the inclined surface (39) and thereby compresses the at least one elastic element (34).

12. The method according to claim 9, wherein the at least one stack (11, 12) of the plurality of battery cells (13) is compressed before inserting into the module space (28).

13. The method according to any of the claims 9 to 12, wherein the structural component (22) of the module frame (21) is preassembled.

14. A vehicle including a battery pack comprising at least one battery module (10) according to any one of the claims from 1 to 8.
